# EUROPEAN PATENT APPLICATION

(11) **EP 1 897 828 A1**
(43) Date of publication of application: **12.03.2008**
(21) Application number: 06756965.7
(22) Date of filing: 05.06.2006
(51) Int. Cl.: B65G 61/00

(54) **SHARING TRACEABILITY MANAGEMENT SYSTEM**

(30) Priority: 07.06.2005 JP 2005166679
(71) Applicant: Pentax Corporation, Tokyo 174-8639 (JP)
(72) Inventor: NAKAMURA, Kazuo, c/o PENTAX Corporation, Tokyo 174-8639 (JP)
(74) Representative: Schaumburg, Thoenes, Thurn, Landskron
(86) International application number: PCT/JP2006/311204
(87) International publication number: WO 2006/132174

(57) **Abstract**

Each of vendors connected to each other via a network includes a management data creation means that creates, in regard to relationship between processes, management data formed as a single file in which the product data and the partial object data are associated with connection information representing connection between a preceding process and a corresponding next process, when final products are shipped toward to a downstream side vendor by executing a sequence of process where a preceding process for creating products used as parts in a next process and a next process for creating second products using the products created by at least one preceding process as parts are successively connected; a data storage means that stores the management data created in association with each process; and a data communication means that transmits, to the downstream side vendor, final management data regarding a process for creating final products when the final products are shipped to the downstream side vendor, and that receives the final management data transmitted by an upstream side vendor. The received final management data is stored in the data storage means.

## Description

### TECHNICAL FIELD

The present invention relates to a distributed traceability management system for managing objects distributed along a path connecting continuously a plurality of vendors.

### BACKGROUND OF THE INVENTION

Conventionally, when products are manufactured on a product line, various types of parts are mounted on a main part while the main part is conveyed along the product line from an upstream side to a downstream side. In Japanese Patent Provisional Publication No. 2001-56706A, the assignee of this application suggested a management system capable of simplifying manufacturing management and enhancing a function of traceability (i.e., a tracing function). In this publication, the assignee focuses attention on the fact that each part used by manufacturing equipment is previously manufactured as a product in another manufacturing equipment. In addition, the assignee regards a functional unit, where parts are collected and then a product (i.e., a part manufactured with each manufacturing equipment) is manufactured, as a "process", and expresses manufacturing of a final product as a hierarchical structure of a plurality of processes.

In Japanese Patent Provisional Publication No. 2004-78743A, a system that manages, in a concentrated manner, information concerning a plurality of vendors by a single administration site server is disclosed. In the publication 2004-78743A, the administration site server sequentially accumulates a sequence of pieces of production information, process information or etc. of management targets in the vendors. Finally, various types of information in all the vendors with which the management targets are associated are accumulated in the administration site server. Therefore, consumers are able to obtain various types of information, such as a sequence of pieces of distribution path information or other information, concerning the management targets by accessing the administration site server. The administration site server provides the downstream side vendors with information concerning management targets in the upstream side vendors accumulated then. The downstream side vendors are able to refer to processes through which the management targets pass and various types of information to execute more suitable manufacture, processes or etc.

### DISCLOSURE OF THE INVENTION

In order to enhance easiness and the traceability function of management of targets distributed through the vendors, it may be possible to constitute a management system which is a combined system of the systems disclosed in 2001-56706A and 2004-78743A. In such a system, each vendor generates management data while managing all the processes of management targets in its own company, and uploads the management data to the administration site server, and the administration site server manages, in a concentrated manner, the management data from each vendor while accumulating the management data. In addition, it is assumed that the administration site server provides the downstream side vendors with the accumulated information concerning the processes of the management targets in the upstream side vendors.

In the combined management system of 2001-56706A and 2004-78743A, the management site server totally grasps various types of information such as management processes or the others regarding the management targets in each vendor. Further, the downstream side vendor totally grasps various types of information such as management processes or the others regarding the upstream side vendor. However, such information may contain information (e.g., personal information) which should not be opened to third parties in regard to information protection or information (e.g., processes which the vendor does not want to open to competitors) which the vendor does not want to open to public. That is, according to the combined system, all the information to which the targets are related is opened as compensation for enhancement of the traceability function and easiness of management of targets. For this reason, the assumed combined system has a drawback in regard to protection of information.

The present invention has been made in consideration of the above problems. It is therefore the object of the present invention to provide a distributed traceability management system configured to be able to suppress leaking of information from a vendor to a minimum level while easing management of targets distributed through a plurality of vendors and enhancing the traceability function.

According to an aspect of the invention, there is provided a distributed traceability management system managing objects distributed along a path successively connecting a plurality of vendors. The distributed traceability management system according to an embodiment includes a management data creation means that creates, in regard to a management target object, product data corresponding to products in a preceding process and partial object data which corresponds the products and to partial objects of a next process, and creates, in regard to relationship between processes, management data formed as a single file in which the product data and the partial object data are associated with connection information representing connection between a preceding process and a corresponding next process, when final products are shipped toward to a downstream side vendor by executing a sequence of process where a preceding process for creating products used as parts in a next process and a next process for creating second products using the products created by at least one preceding process as parts are successively connected, a data storage means that stores the management data created in association with each process, and a data communication means that transmits, to the downstream side vendor, final management data regarding a process for creating final products when the final products are shipped to the downstream side vendor, and that receives the final management data transmitted by an upstream side vendor. The plurality of vendors are connected to each other via a network, and the received final management data is stored in the data storage means.

### BRIEF DESCRIPTION OF THE DRAWINGS

[Fig. 1] Fig. 1 illustrates a movement path of a box moving between processes in accordance with an embodiment of the invention.
[Fig. 2] Fig. 2 illustrates a relationship between processes in accordance with the embodiment of the invention.
[Fig. 3] Fig. 3 illustrates a configuration of a distributed traceability management system in accordance with the embodiment of the invention.
[Fig. 4] Fig. 4 illustrates a configuration of a server in accordance with the embodiment of the invention.
[Fig. 5] Fig. 5 illustrates a configuration of a terminal in accordance with the embodiment of the invention.
[Fig. 6] Fig. 6 is a flowchart illustrating a management data update process in accordance with the embodiment of the invention.
[Fig. 7] Fig. 7 illustrates management data corresponding to the flowchart (S1-S3) according to the embodiment.
[Fig. 8] Fig. 8 illustrates management data corresponding to the flowchart (S4-S6) according to the embodiment.
[Fig. 9] Fig. 9 illustrates management data of a box a1 created finally in accordance with the embodiment of the invention.
[Fig. 10] Fig. 10 illustrates the management data D_{f1} at a state of shipping of products in a vendor M₁.
[Fig. 11] Fig. 11 illustrates each stage regarding the management data D_{f1}.

### BEST MODE FOR CARRYING OUT THE INVENTION

By using a distributed traceability management system according to an embodiment of the invention, it is possible to achieve management (total management of the production process including a plurality of processes in this embodiment) of objects subjected to various processes in each vendor as well as management of objects (tangible objects, for example, parts, products, meat) distributed through paths continuously connected through a plurality of vendors. The term "process" as used herein means a functional unit of manufacturing products using received parts. That is, a "process" represents a functional unit achieved by production equipments such as machine tools mounted in a certain region in a production facility such as a factory, various warehouses for storing parts and products, and a worker who carries out production activity using these manufacturing equipments and warehouses. The manufacturing of final products is modeled by a tree structure in which these "processes" are connected sequentially in a hierarchical structure.

First, the process management of production processes in a distributed traceability management system according to the embodiment is explained.

These processes are connected to each other in a predetermined order. In each process, products are manufactured with parts carried from a preceding process and then the products are carried toward a next process. For example, the parts and products are treated in a condition where several tens of or several hundreds of parts and products are stored in a box. Each box is provided with box identification for distinguishing one box from another box. More specifically, a barcode representing identification of a box is attached to a surface of each box. The identification may be information for identifying each box in regard to all of the processes. Alternatively, the identification may be information for identifying each box in regard to each process.

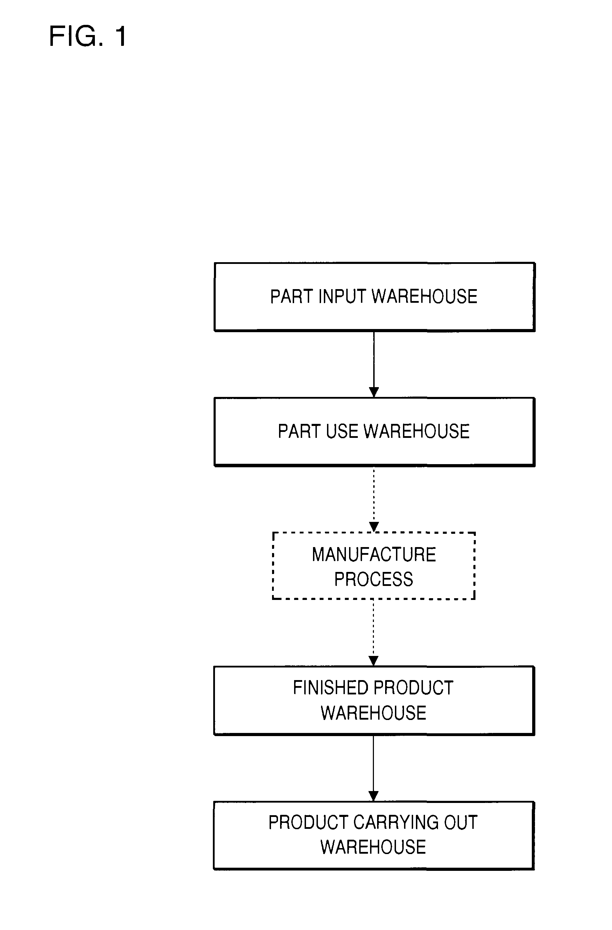

The various warehouses include a part input warehouse, a part use warehouse, a finished product warehouse, and a product carrying out warehouse. Hereafter, transfer of parts and products between warehouses in each process is explained with reference to Fig. 1.

When a box containing parts arrives at a certain process, a worker stores the box in the part input warehouse. When manufacturing is started, the worker selects a desired box from the boxes stored in the part input warehouse, and then transfers the selected box to the part use warehouse. Then, the worker manufactures products with parts in the box transferred to the part use warehouse. Finished products are then stored successively in a box which is different from the box storing the parts. After finish of manufacturing, the worker stores the box containing the finished products in the finished product warehouse. For shipment, the worker selects required boxes from the boxes in the finished product warehouse and transfers the selected boxes to the product carrying out warehouse. It should be noted that the boxes transferred to the product carrying out warehouse are immediately carried out to a next process (in particular, to the part input warehouse for a next process).

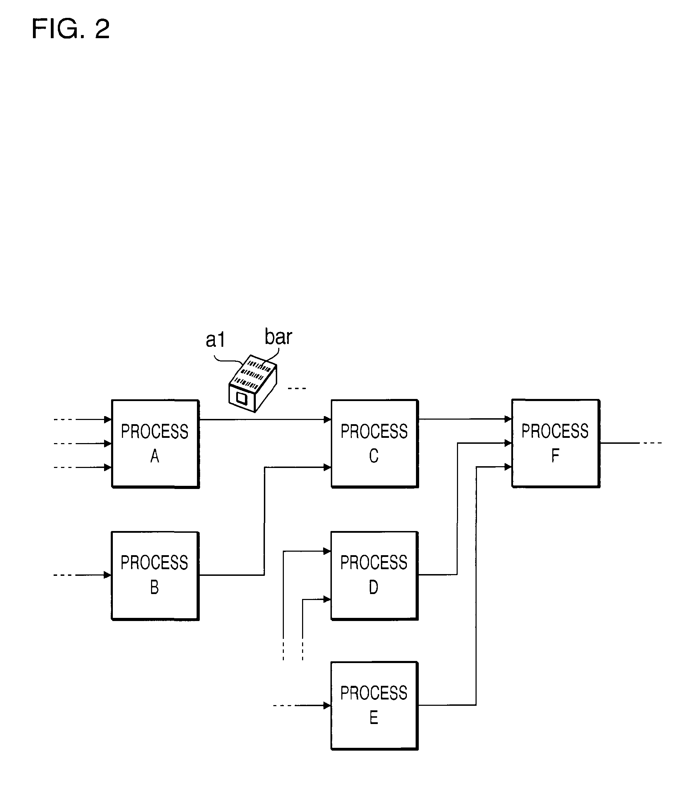

Fig. 2 schematically illustrates relationship between processes for manufacturing products in a certain vendor (a manufacturer M₁). In Fig. 2, six processes (a process A, a process B, a process C, a process D, a process E, a process F) of the plurality of processes are illustrated. By connecting the processes in a predetermined order, final products are produced.

In Fig. 2, the process C receives products finished in the process A and products finished in the process B as parts for the process C. Then, the process C subjects the received parts to assembling or processing to finish them as products, and carries them to the process F.

The process F receives products of the process C, products of the process D, and products of the process E to finish products of the process F. In this example, the products of the process F are regarded as final products of the entire manufacturing process.

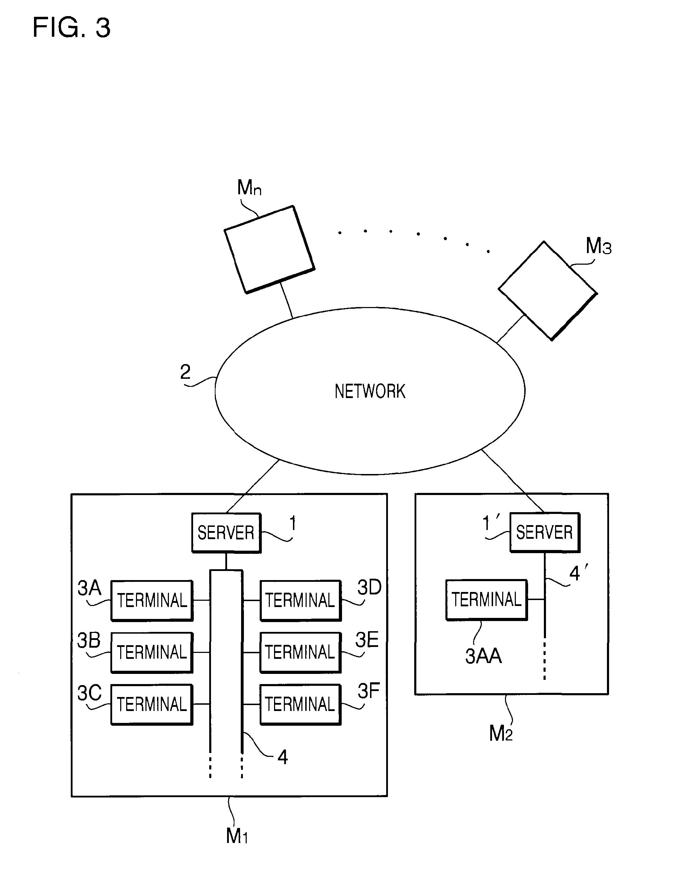

Next, a configuration of a distributed traceability management system for managing each of the production processes and distribution of products is explained. Fig. 3 illustrates an example of a configuration of the distributed traceability management system according to the embodiment. The distributed traceability management system according to the embodiment includes a plurality of servers which are connected to each other via a network 2 and are respectively installed in vendors M₁-Mₙ related to distribution of management targets, and a plurality of terminals connected to each other via a LAN (Local Area Network) formed in each vendor. These terminals are also connected to the server via the LAN.

Various types of vendors can be related to the distribution of the management targets. Since in this embodiment industry products are targeted for management targets, a manufacturer such as a part vendor or an assembly maker, a wholesale agency, or a retail seller can be the associated vendors, for example. A manner of management and the configuration of provided devices (the server and the terminal connected thereto) are the same for each vendor. In the embodiment, a part (manufacturers M₁ and M₂) of the vendors is explained, and explanations of other vendors are omitted for the sake of simplicity. The manufacturer M₁ is, for example, a part vendor, and the manufacturer M₂ is, for example, an assembly maker. Products produced by the manufacturer M₁ is shipped (distributed) toward the manufacturer M₂, and are used as parts.

The manufacturer M₁ has a server 1 connected to a network 2, and a plurality of terminals 3A to 3F connected to the server 1 via a LAN 4 implemented in the manufacturer M₁. The terminals 3A to 3F correspond to processes A to F, respectively. The terminals 3A to 3F are not connected to the external (i.e., server and terminals of another manufacturer), and are capable of communicating with only devices connected to the LAN 4.

The Server 1 and the terminals 3A to 3F are explained in detail below.

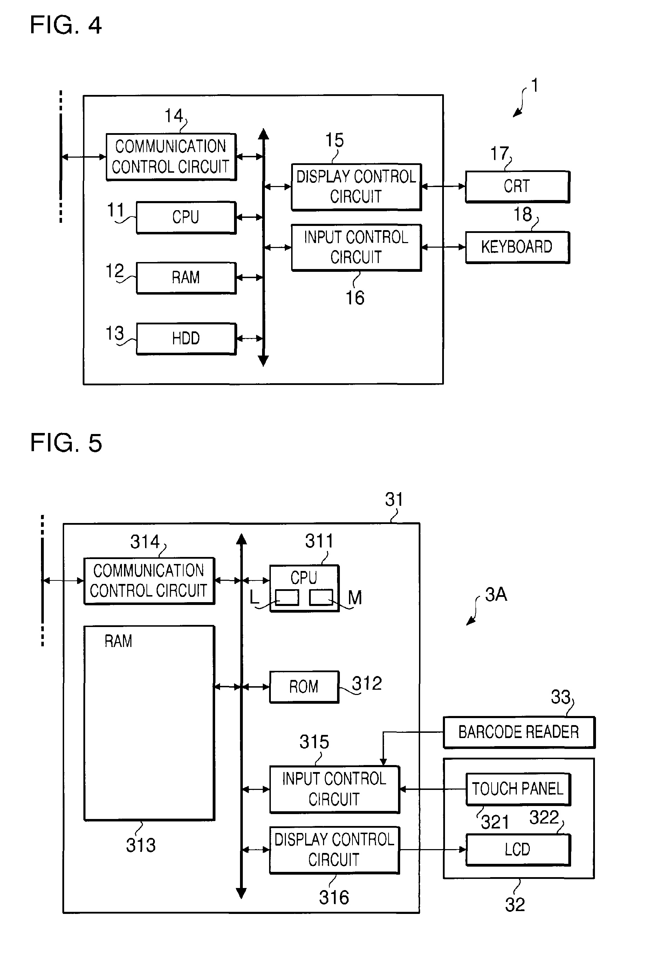

Fig. 4 illustrates a configuration of the server 1. As shown in Fig. 4, the server 4 is a device for totally managing terminals, and includes a CPU (Central Processing Unit) 11, a RAM (Random Access Memory) 12, an HDD (Hard Disk Drive) 13, a communication control unit 14, a display control circuit 14, and an input control circuit 16 which are connected to each other via a bus. Further, the server 1 includes a CRT 17 connected to the display control circuit 15, and a keyboard 18 connected to the input control circuit 16. Further, the server 1 is connected to the LAN 4 through the communication control circuit 14.

In the HDD 13, various programs such as an operating system and a database program have been stored in advance. In the HDD 13, management data which is data associated with a link indicating connection between processes is also stored. The term link as used herein means information regarding connection which lies between processes in the distributed traceability management system and is used for associating the processes with each other. In this embodiment, the link corresponds to box identification information. The CPU 11 reads a program stored in the HDD 13 and loads the program on a predetermined area of the RAM 12 to execute the program. The CUP 11 controls the display control circuit 15 and displays an image on the CRT 17 to output information for the worker. When the worker conducts an input operation through the keyboard 18, the CPU 11 detects the input operation through the input control circuit 16. If defects occur in manufactured productions, the worker is able to instruct the server 1 to execute defect tracing by inputting a predetermined command through the keyboard 18.

Fig. 5 illustrates a configuration of the terminal 3A. Since each of the other terminals 3B to 3F has the same configuration as that of the terminal 3A, explanations of the other terminals 3B to 3F are omitted and only explanation of the terminal 3a is made. As shown in Fig. 5, the terminal 3A includes a programmable logic controller (hereafter, abbreviated as PLC) 31, a display input device 32, and a barcode reader 33.

The PLC 31 includes a CPU 311, a ROM (Read Only Memory) 312, a RAM 313, a communication control circuit 314, an input control circuit 315, and a display control circuit 316. The CPU 311 includes a built-in timer M as a clocking means. The CPU 311 is able to obtain a time (year, month, day, hour, minute, second) through the timer M. Further, the CPU 311 includes a built-in counter L for counting the time representing use of parts and the time representing manufacturing of products. In the ROM 312, various programs such as a database program are stored in advance.

The display input device 32 includes a touch panel 321 and a liquid crystal panel (hereafter, abbreviated as an LCD) 322. The touch panel 321 is located on the LCD 322, and is connected to the input control circuit 315 of the PLC 31. The LCD 322 is connected to the display control circuit 316.

The barcode reader 33 is used to read box identification information and etc. (e.g., a barcode "bar" shown in Fig. 2) attached to a box containing parts/products in a form of a barcode. The barcode reader 33 is connected to the input control circuit 315 of the PLC 31.

The CPU 311 of the PLC 31 loads a program stored in the ROM 312 onto a certain area of the RAM 313 and executes the program. The CPU 311 controls the display control circuit 316 to display an image on the LCD 322 of the display input device 32. The image includes, for example, a carry-in button, a use start button, a manufacture start button, a use end button, a manufacture end button, a carrying-out button, a work suspend button, and a work restart button. The carrying-in button is a button to be pressed when parts are carried in a process. The use start button is a button to be pressed when use of parts is started. The manufacture start button is a button to be pressed when manufacturing of products is started. The use end button is a button to be pressed when use of parts is ended. The manufacture end button is a button to be pressed when manufacturing of products is ended. The carrying-out button is a button to be pressed when products are carried toward a next process. The work suspend button is a button to be pressed when use of parts or manufacturing of products is suspended. The work restart button is a button to be pressed when the suspended use of parts or manufacturing products is restarted.

By pressing each button displayed on the LCD 322, the worker is able to conduct an input operation. That is, the touch panel 321 located on the LCD 322 is able to detect a position at which the worker presses the screen, and is able to transmits a signal representing the position to the input control circuit 315 of the PLC 31. The CPU 311 is able to detect a position at which the worker presses the screen through the input control circuit 315, and to recognize whether the position coincides with one of positions of the buttons.

If the worker controls the barcode reader 33 to read the barcode "bar", the barcode reader 33 obtains the barcode data corresponding to the barcode "bar", and transmits the barcode data to the input control circuit 315. The PLC 31 temporarily stores the obtained data to the RAM 313.

Each of the terminals 3A to 3F configured as above, is connected to the LAN 4 via the communication control circuit 314. The data temporarily stored in the RAM 313 is recorded in the HDD 13 of the server 1 via the LAN 4.

Next, a relationship between a flow of parts/products in each of actual processes and data processing in the distributed traceability management system is explained. As described above, in each process parts/products are treated in a state where the parts/products are contained in a box (i.e., in a state where parts/products are combined in a box).

The distributed traceability management system executes each of various processes while associating each box to a management data unit (i.e., a file of management data). Each of the pieces of management data is processed by a database program of the server 1 and a database program of each of the terminals 3A to 3F.

The management data is data associated with the box identification information of a box being transferred between two processes. In a box, products of one process (a preceding process) are contained. Contents of the box are treated as parts in a next process. Accordingly, the management data contains data regarding a preceding process (preceding process data), i.e., data defined by considering objects stored in the box as products, and data regarding a next process (next process data), i.e., data defined by regarding objects stored in the box as parts.

The preceding process data includes product process name data, product box content data, product manufacture start time data, product manufacture end time data, product environmental condition data, product carrying in time data, product carrying out time data, product operator data, product defect information, product manufacture time data. The product process name data is data representing a name of a process where the products are manufactured. The product box content data is data representing whether the box contains nondefective products or defective products. The product manufacture start time data is data representing the time when the manufacturing of products is started. The product manufacture end time data is data representing the time when the manufacturing of products is finished. The product environmental condition data is data representing an environmental condition such as humidity during the manufacturing. The product carrying in time data is data representing the time when the products are carried in the finished product warehouse. The product carrying out time data is data representing the time when the products are carried to a next process. The product operator data is data regarding a worker who is in charge of manufacturing the products. The product defect information is data representing defective products occurred during the manufacturing of products. The product manufacture time data is data representing the time during which the worker manufactured the products.

It is understood that the product process name data can be replaced with data representing a name of a process where the products are stored in the box. The product manufacture start time data can be replaced with data representing the time when storing of the products into the box is started. The product manufacture end time data can be replaced with data representing the time when storing of the products into the box is finished.

The product manufacture time data is data representing a count generated by the counter L of the CPU 311 by counting a time period between a time when the manufacture start button is pressed and a time when the manufacture end button is pressed. More specifically, the count starts to increase from a count (=0) when the manufacture start button is pressed. When the work suspend button is pressed, the count is fixed. Then, the count starts to increase again from the fixed value when the work restart button is pressed. When the manufacture end button is pressed, the count is stored temporarily in the RAM 13 as a count value corresponding to the product manufacture time data. The count is then converted to the product manufacture time data by a program. Since a time period during which the count increases is a time obtained by subtracting a time corresponding to suspending of work (e.g., intermissions of the worker) from a time period between start of the manufacturing of products and end of the manufacturing of products, the count corresponds to a time during which the worker actually manufactures the products. Therefore, the product manufacture time data corresponds to a time actually spent for the manufacturing of products.

The above mentioned product defect information includes various types of data. This data includes product pass number data, product failure number data, product pending number data, product rework number data, defective process name group data, part group-specific defect number data, defective product item data, and item-specific defective product number data. The product pass number data is data representing the number of products manufactured as nondefective products in a process. The product failure number data is data representing the number of defective products in the process. The product pending number data is data representing the number of products of which pass or failure is unclear in the process. The product rework number data is data representing the number of products which can become nondefective products by an easy rework. The defective process name group data represents a process name group where parts, used when defectives are produced in the process, are manufactured. The part group-specific defect number data is data representing the number of defective products classified by a part group when the defectives are produced. The defective product item data is data of an item representing a factor of the defectives of the products. The item-specific defective product number data is data representing the number of defective products classified by the item.

The next process data includes, for example, part process name data, part use start time data, part use end time data, part carrying in time data, part preparation time data, part user data, part defect information, and part use time data. The part process name data is data representing a name of a process where parts are used. The part use start time data is data representing the time when use of the parts is started. The part use end time data is data representing the time when use of the parts is finished. The part carrying in time data is data representing the time when the parts are carried in the part input warehouse. The part preparation time data is data representing the time when the parts are carried in the part use warehouse. The part user data is data regarding the worker who used the parts. The part defective information is data regarding defectives during use of the parts. The part use time data is data representing a time actually spent by the worker for use of the parts.

The part process name data can be replaced with data of a name of a process where parts are unpacked from a box. The part use start time data can be replaced with data representing the time when unpacking of the parts from the box is started. The part use end time data can be replaced with data representing the time when the unpacking of the parts from the box is finished.

The part use time data is data representing a count generated by the counter L of the CPU 311 by counting a time period between a time when the use start button is pressed at the start of use of parts and a time when the use end button is pressed at the end of use of the parts. More specifically, the count starts to increase from a count (=0) when the use start button is pressed. When the work suspend button is pressed, the count is fixed. Then, the count starts to increase again from the fixed value when the work restart button is pressed. When the use end button is pressed, the count is stored temporarily in the RAM 313 as a count value corresponding to the part use time data. The count is then converted to the part use time data by a certain program. Since a time period during which the count increases is a time obtained by subtracting a time corresponding to suspending of the work (e.g., intermissions of the worker) from a time period between start of use of the parts and end of use of the parts, the count corresponds to a time during which the worker actually uses the parts. Therefore, the part use time data corresponds to a time actually spent for the use of the parts.

The above mentioned part defect information includes various types of data. This data includes part pass number data, part failure number data, defective part item data, and item-specific defective part number data. The part pass number data is data representing the number of parts used as nondefectives in the process. The part failure number data is data representing the number of parts judged to be defectives in the process. The defective part item data is data of an item representing a factor of failure of the parts. The item-specific defective part number data is data representing the number of defective parts for each item.

By thus obtaining the product defect information and the part defect information, a manager side is able to plan a detailed manufacturing schedule of a process while also considering the percentage of defectives, to predict occurrence of failure, to treat preferentially the process where the defects are found, and to achieve early detection of the defectives.

When the articles (parts/products) are transferred in each process or between processes, the management data is updated in the distributed traceability management system in accordance with the flow of the articles.

For example, when attention is given to the process C in Fig. 2, the products shipped from the process A are received by the process C as parts for the process C, and the products shipped from the process B are received by the process C as parts of the process C. In this case, the product groups manufactured in the process A are carried toward the process C in a condition where the product groups are assigned predetermined box identification information (a1, a2, a3···) provided as barcodes, for example. Hereafter, the box assigned the box identification information "a1" is abbreviated as "box a1" (boxes assigned other types of box identification information are similarly abbreviated).

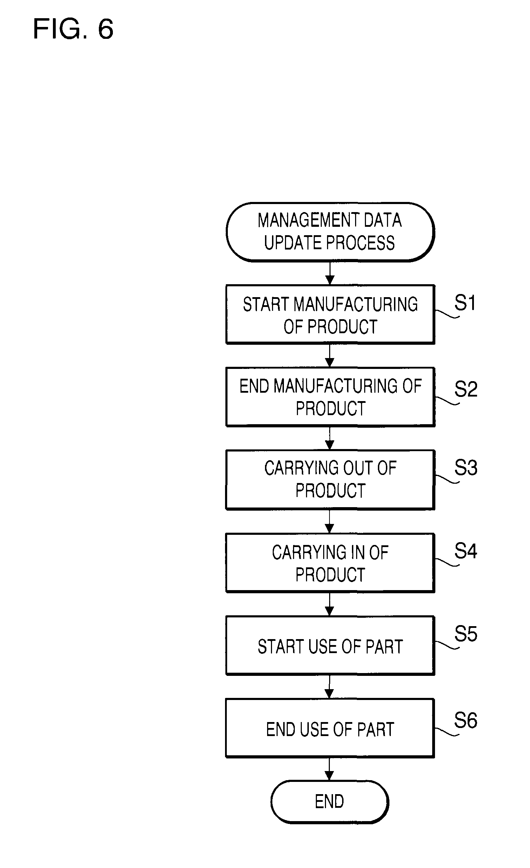

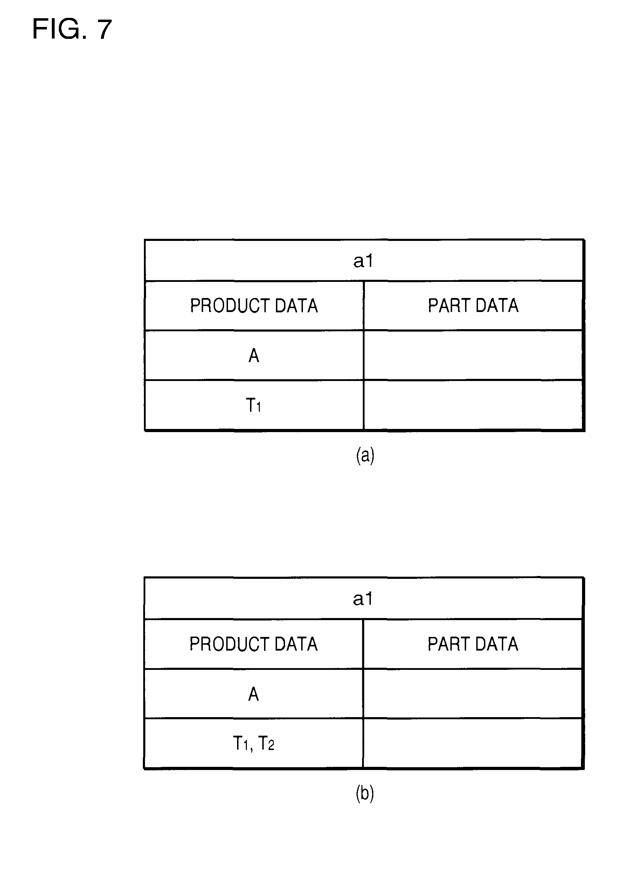

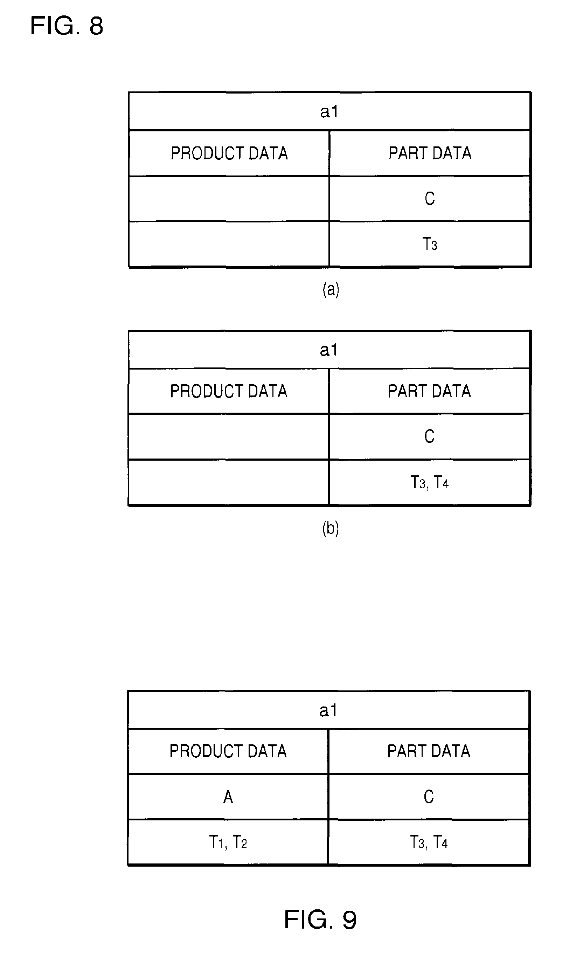

Fig. 6 is a flowchart illustrating a management data update process according to the embodiment. Fig. 7 shows explanatory illustrations which correspond to the flowchart (S1-S3) of Fig. 6 and which explain the management data according to the embodiment. Fig. 8 shows explanatory illustrations which correspond to the flowchart (S4-S6) of Fig. 6 and which explain the management data according to the embodiment. Fig. 9 is explanatory illustrations for explaining the management data generated through the process of S1-S6. Hereafter, an example of an update process (an update process for the management data D regarding the box al) for management data according to the embodiment is explained with reference to Figs. 6 to 9. Hereafter, the management data D for the box a1 is abbreviated as "management data Dₐ₁" (the management data D for other boxes are similarly abbreviated). It should be noted that data shown in drawings (Fig. 7 to 12) for explaining the management data is assigned reference numbers only for the purpose of explanations.

When manufacture of products are started in the process A (S1), the worker first selects a box storing parts to be used from now on and a box in which products manufactured with the parts are to be stored. More specifically, the worker selects a box from each of box groups storing articles which are treated as parts in the process A, and uses the barcode reader 33 to read a barcode attached thereto. Further, the worker selects a box from a box group for storing the products manufactured in the process A, and uses the barcode reader 33 to read a barcode attached to the box. Here, only the box a1 of a box group storing the products manufactured in step A is explained for the sake of simplicity, and explanations for other boxes are omitted. Since a processing example of the box a1 storing parts is explained later, an update process for the management data regarding a box group storing parts is not explained here.

To the box a1, a barcode including data (the process A in this case) of a name of a process where manufactured products are stored and data (the product box content data which represents nondefective products in this case) indicating which of the nondefective product, defective product, and unclear product the box contains is attached. The data read by the barcode 33 is stored in the RAM 313 of the terminal 3A.

The product process name data (hereafter, referred to as "A") is equal to the part process name data (described later) assigned to the box storing the articles treated as parts in the process A. Therefore, into the management data Dₐ₁ including the product process name data, "the process C" is included as the part process name data.

When the above mentioned data is inputted to the terminal 3A through the barcode reader 33, the worker operates the touch panel 321 to further input data to the terminal 3A. The data inputted here includes the product operator data, the product environmental condition data, and the product manufacture start time data. Specifically, the product manufacture start time data is a time of the timer M stored in the RAM 313 when the manufacture start button is pressed.

Hereafter, "T₁" is assigned to the product manufacture start time data for the sake of convenience. When the manufacture of products are started in the process A, the product process name data "A" and the product manufacture start time data T₁ are stored in the RAM 313 (see Fig. 7(a)). Considering the input of the product operator data and the product environmental condition data as a trigger, it is possible to obtain the time when these pieces of data are inputted to the terminal 3A through the internal timer, and to store it in the RAM 313 as the product manufacture start time data T₁. The product operator data is not required each time the work is conducted. Input of the product operator data is required when the worker starts to use the terminal 3A. However, unless a new input is provided in the subsequent processes, the same product operator data is used successively.

The manager side is able to recognize the ability of the worker in charge of the process A to manufacture the product through the product operator data. As a way of recognizing the ability, a comparison with the product operator data in another process or the part user data in another process can be listed. The manager side is able to recognize the speed of the manufacturing of products for each worker. For example, the speed of the manufacturing of products can be obtained by the number of manufactured products per a unit of time in each process based on information obtained from the management data. If a product which is judged to be a nondefective product in the process A is judged to be a defective part in the process C, there is a possibility that the defective/nondefective judgment in the process A or in the process C is an error. When an error in the defective/nondefective judgment is found after the later investigation, the manager side is able to identify the worker who made a mistake. Since it is possible to manage attendance of the worker by utilizing the product operator data, the manager side is able to urge the worker to enhance the ability. It is also possible to judge whether the amount of work is appropriate based on working hours or the number of manufactured products of the worker. If the speed of the manufacturing of products decreases extremely, it is possible to judge whether the worker is in poor physical condition.

The product environmental condition data is data for notifying the manager of a condition (e.g., temperature or humidity) measured when a product is judged to be defective or nondefective. The manager side is able to analyze the factor of the defect (the condition of temperature or humidity) based on the product environmental condition data.

The product manufacture start time data T₁ and various types of time data which are described later are data used for analysis of the number of manufactured products per a unit of time, trace information, a lead time, and a failure analysis.

When the product process name data "A" and the product manufacture start time data T₁ are inputted to the terminal 3A, the worker starts to manufacture products in the process A. Each time the finished product is placed in the box a1, the worker inputs the condition of the product to the RAM 313 through the touch panel 321. The term condition of the product as used herein relates to the defectives occurred during the manufacture of products. The data concerning the defectives inputted to the terminal 3A includes, for example, the product pass number data, the product pending number data, the product rework number data, the defective process name group data, the part group-specific defect number data, the defective product item data, and the item-specific defective product number data. The box a1 is a box for storing nondefectives (products to be used as parts in the process C). Therefore, each time the worker places a product in the box a1, the worker operates the touch panel 321, so that the number of passed products (nondefectives) can be counted.

If the box a1 is a box for storing defectives, the worker executes a certain mode for processing defectives on the terminal 3A so that the product failure number data, the defective process name group data, the part group-specific defect number data, the defective product item data, and the item-specific defective product number data are inputted. If the box a1 is a box for storing products of which pass or failure is unclear, the worker executes a predetermined process for processing the products of which pass or failure is unclear on the terminal 3A, and inputs the product pending number data to the terminal 3A. If the box a1 is a box for storing reworked parts, the worker executes a predetermined process for processing reworked parts on the terminal 3A, and inputs the product rework number data to the terminal 3A.

When the manufacturing of products (including a work for storing products) for the box a1 is finished (S2) and the manufacture end button is pressed by the worker through the touch panel 321, the time of pressing is stored in the RAM 313 as the product manufacture end time data (hereafter, the product manufacture end time data is assigned "T₂"), and the total number of passed products is stored in the RAM 313 as the product pass number data. (see Fig. 7(b)).

The manager side is able to figure out the number of manufactured products per a unit of time based on the product manufacture end time data T₂, the product manufacture start time data T₁, the product pass number data, the product failure number data, the product pending number data, and the product rework number data.

When the manufacturing of products in the process A is finished, the box a1 is carried in the finished product warehouse as a stock. At this moment, the product carrying in time data is inputted to the RAM 313. If the latest time data of the management data Dₐ₁ is the product carrying in time data, this means that the box a1 is stored in the finished product warehouse. That is, the product carrying in time data is also data for notifying the manager of the current position information of the box a1.

If the process C requests the manufactured products from the process A, the worker of the process A transfers the box a1 stored in the finished product warehouse to the product carrying out warehouse. That is, the box a1 is carried to the process C (S3). At this moment, the worker obtains data (the product carrying out time data) of the time when the box a1 is transferred to the product carrying out warehouse (i.e., the time when the box a1 is transferred to the product carrying out warehouse) from the internal timer by pressing the carrying out button, and stores the data in the RAM 313.

The various types of data stored temporarily in the RAM 313 in the processes previously executed (S1-S3) are data obtained by considering articles in a box as products, and are data regarding the process A (hereafter, the data are abbreviated as box a1 product data). When the product carrying out time data is stored in the RAM 313, the box a1 leaves from the process A. Therefore, the management data Dₐ₁ storing only the box a1 product data is transmitted to the server 1 via the PC2 and the LAN 4, and is stored in the HDD 13 as one file.

When the box a1 carried out of the process A is carried in the part input warehouse of the process C (S4), the worker uses the terminal C provided for the process C to proceed the updating process of the management data Dₐ₁. Since the terminal C has the same configuration as that of the terminal A, explanations of each component in the terminal C are omitted. In the following, each component of the terminal C is indicated by adding "c" to a symbol of a corresponding component of the terminal A.

When the box a1 is carried in the part input warehouse, data (part carrying in time data) of the time when the box a1 is carried in the part input warehouse is stored in the RAM 313 by pressing the carrying in button of the touch panel 321c of the terminal C. If the latest time data of the management data Dₐ₁ is the part carrying in time data, this means that the box a1 is stored in the part input warehouse. That is, the part carrying in time data is data for notifying the manager of the current position information of the box a1.

By calculating a difference between the part carrying in time data and the product carrying out time data, it is possible to know a lead time from the process A to the process C. For example, the lead time calculated here may be stored in the management data of the process A or C together with another data. When the worker prepares the manufacturing work for products in the process C, the worker transfers the box a1 stored in the part carrying in warehouse to the part use warehouse. At this moment, the worker stores data (the part preparation time data) representing the time when the box a1 is transferred to the part use warehouse in the RAM 313c by operating the touch panel 321 c.

When the manufacturing of products is started in the process C (S5), the worker of the process C first selects a box from among each box group (boxes storing the products manufactured in the process A or B) storing articles used as parts in the process C. Then, the worker uses the barcode reader 33c of the terminal 3C to read a barcode attached thereto. Further, the worker selects a box from among boxes in which products manufactured in the process C are to be stored. In the following, only the box a1 of boxes storing articles used as parts in the process C is explained for the sake of convenience, and explanations for other boxes are omitted. Explanations for an updating process for boxes storing products manufactured in the process C are made only for the box a1.

To the box a1, the barcode containing the part process name data (i.e., the process C), as well as the above mentioned box identification information a1, the product process name data "A", and the product box content data is attached. The data read by the barcode reader 33c is stored in the RAM 313c.

It should be noted that data represented by the part process name data (hereafter, referred to as "C") is the same as data represented by the product process name data given to a box for storing products manufactured in the process C. Specifically, both represent the "process C".

The worker inputs the above mentioned data to the terminal 3C through the barcode reader 33c. Next, the worker operates the touch panel 321c to further input data to the terminal 3C. For example, the data inputted here includes the part user data and the part use start time data. The part use start time data is the time of the timer M stored in the RAM 313 when the use start button is pressed. In the following, "T₃" is added to the part use start time data for the sake of convenience. As described above, when use of parts is started in the process C, the part process name data and the part use start time data T₃ have been stored in the RAM 313c (see Fig. 8(a)). It is also possible to store the time when the part user data is inputted to the terminal 3C, in the RAM 313c, as the part use start time data T₃, by regarding an input of the part user data as a trigger of the start of use of parts.

The manager is able to grasp the manufacturing performance of the worker in charge of the process C using the part user data as well as the above mentioned product operator data. In addition, the worker is able to judge whether the workload is appropriate based on the working hours and the number of products. It is also possible to judge whether the worker is in poor physical condition when the manufacturing speed of products decreases extremely.

When the part process name data "C" and the part use start time data T₃ are inputted to the terminal 3C, the worker starts to use the parts in the process C. Each time the worker picks up a part from the box a1, the worker inputs a condition of the part to the terminal 3C through the touch panel 321 c. The condition of a part as used herein relates to defectives included in the parts stored in the box a1. For example, the data concerning defectives inputted to the terminal 3C includes the part pass number data, the part failure number data, the defective part item data, and the item-specific part number data.

When use of the parts in the process C is finished (S6) and the touch panel 321 is operated (i.e., the use end button is pressed) by the worker, the time of the operation is stored in the RAM 313c as the part use end time data (hereafter, represented by adding "T₄" to the part use end time data for the sake of convenience) (see Fig. 8(b)).

The part process name data "C", the part use start time data T₃, and the part use end time data T₄ stored temporarily in the RAM 313c are data defined when articles stored in a box are regarded as parts, and are data relating to the process C (hereafter, abbreviated as box a1 part data). Since the function of the box a1 (i.e., storage and movement of articles) is finished when the part use end time data T₄ is stored in the RAM 313c, the management data Dₐ₁ containing only the box a1 part data is transmitted to the server 1 via the LAN 4 so that the management data Dₐ₁ containing the box a1 product data previously transmitted is updated. Finally, the management data Dₐ₁ is recorded in the HDD 13 (see Fig. 9) as one file containing both of the box a1 product data and the box a1 part data.

If tracing is conducted in the distributed traceability management system according to the embodiment, the CPU 11 of the server 1 searches for time data indicating that the process is in the manufacturing (corresponding to time data between the time data T₁ and T₂) and time data indicating that the part is being used (e.g., data corresponding to the time between the time data T₃ and T₄). If an overlap occurs between the time of the management data which has product data associated with a certain process and indicates that products are in a manufacturing process and the time of the management data which has part data associated with the certain process and indicates that parts are being used, this means that the box associated with these pieces of management information is used concurrently in the same process during the overlapped time period. For example, if the time during which articles in the box a1 are used as parts and the time during which manufactured products are stored in the box cl overlap with each other in the process C, this means that these boxes are used concurrently in the process C and are being associated with each other. If a period during which articles in the box b1 are used as parts and a period during which manufactured products are stored in the box c2 overlap with each other at least partially, this means that these boxes are used concurrently in the process C and are associated with each other. Therefore, by searching for the overlapped time, it is possible to determine which boxes are used to provide parts for manufacturing products stored in a certain box. According to the distributed traceability management system of the embodiment, it is possible to identify an article on a box-by-box basis. Therefore, it is possible to achieve easy management and conduct accurate tracing in a complicated structure of processes in which processed are branched a plurality of times.

As described above, according to the distributed traceability management system of the embodiment, identification information is assigned to each box storing articles being transferred between processes. Each time a process associated with the box is executed, various types of data are collected in association with the identification information, and the collected data for each relationship between processes is stored in the server 1 as a file. Therefore, in the server 1, files associated with each link between processes are gradually accumulated. Consequently, if the manager wants to obtain information on connection between desired processes, the manager is allowed to obtain the information by only searching for a file.

According to a computer readable medium recording management data according to the embodiment, defect data defined when articles are regarded as products in the current process and defect data defined when the articles are regarded as parts in a next process are included in one file. Therefore, if inconsistency occurs between defect information regarding products and defect information regarding parts in the same file, it is possible to quickly judge that defectives are produced. By thus configuring the management data, it is possible to achieve quicker failure analysis.

Hereafter, a process executed by the distributed traceability management system according to the embodiment when groups of products manufactured by the above mentioned manufacturing processes are produced is explained. As described above, according to the model shown in Fig. 2, products manufactured in the process F are final products of the entire manufacturing process in the manufacturer M₁. Therefore, according to the embodiment, the box fn in which products are stored in the process F is distributed to ship the box fn to another manufacturer (a manufacturer M₂).

As shown in Fig. 2, the manufacturer M₂ has a server 1' connected to the network 2, and a plurality of terminals (e.g., 3AA) connected to the server 1' via a LAN 4' implemented in the manufacturer M₂. The terminal 3AA is provided in association with a process AA. The process AA is a process for receiving products shipped from the manufacturer M₁ as parts and subjecting the parts to a certain process.

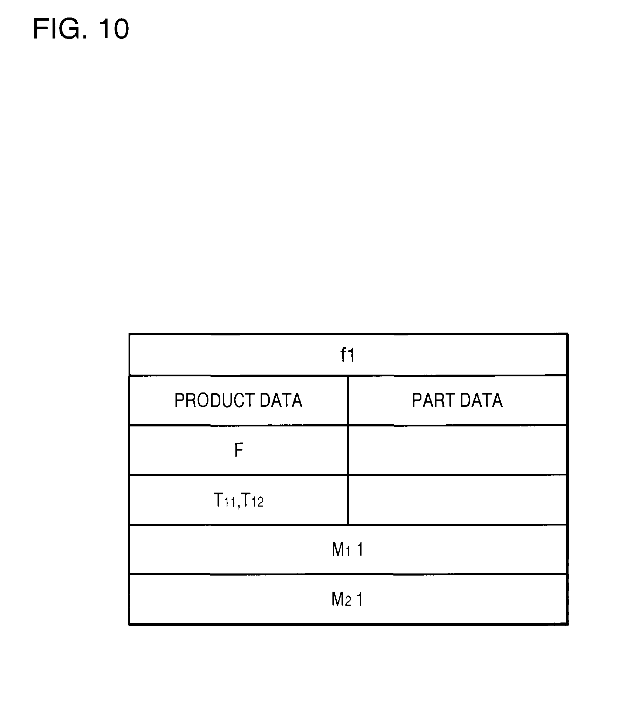

Fig. 10 illustrates management data D_{f1} at the stage of shipping of products in the manufacturer M₁. "F" is the product process name data, "T₁₁" is the product manufacture start time data, and "T₁₂" is product manufacture end time data.

Since the process F handles products to be shipped to another manufacturer, the management data D_{f1} includes field data which is not included in management data of the other processes. In the management data D_{f1}, M₁1 and M₂1 which are the above mentioned field are recorded. The M₁1 is identification information of the system (i.e., the system constituted by the server 1 and the terminals 3A-3F) implemented, for example, in the manufacturer M₁, or is an address of the server 1 on the network. That is, M₁1 is data for identifying its own system on the network. M₂1 is identification information of the system (i.e., the system constituted by the server 1', terminal 3AA and etc.) implemented, for example, in the manufacturer M₂, or is an address of the server 1' on the network. That is, M₂1 is data for identifying its own system on the network. In this embodiment, M₁1 and M₂1 respectively represent addresses of the servers 1 and 1' on the network. This data are known because the manufacturer shipping products grasps the process in which products to be shipped are handled and the manufacturer to which the products are shipped. Therefore, in this embodiment, when the management data D_{f1} is created after the barcode of the box f1 is initially read, M₁1 and M₂1 are already included in the management data D_{f1}.

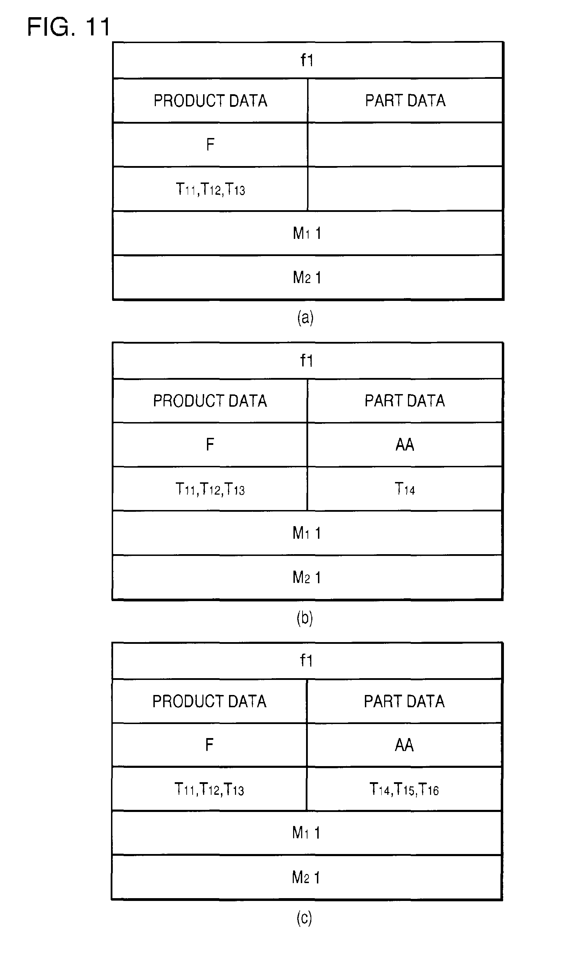

When the box f1 is shipped, the worker uses the barcode reader 33 of the terminal 3F to read the barcode attached to the box. Next, the worker presses the carry-out button of the touch panel 321. In a "region for recording the product carrying out time data", the time T₁₃ at which the box f1 is shipped is recorded (see Fig. 11(a)). When the data of the shipping time is stored, the box f1 leaves the process F. Therefore, the management data D_{f1} in the state shown in Fig. 11(a) is transmitted to the server 1 via the LAN 4 and is recorded in the HDD 13 as a single file. Then, the server 1 refers to M₂1 and transfers the current management data D_{f1} to the server 1'. Thus, the management data D_{f1} in the state shown in Fig. 11(a) is recorded in the HDD of the server 1'. By referring to the management data D_{f1} in such a state, the manufacturer M₂ is able to know that the products are shipped. When the management data D_{f1} is updated to the state shown in Fig. 11(a), the server 1' may actively inform the worker and etc. of the shipping information mentioned above, for example, by displaying such information on a displaying means such as a CRT.

When the box f1 arrives at the manufacturer M₂, the manufacturer M₂ executes reading of the barcode of the box f1 through the barcode reader of the terminal 3AA. The terminal 3AA records the time when the barcode is read in the RAM, and transmits the time to the server 1' via the communication control circuit. In response to receipt of the time when the barcode is read, the server 1' records the process "AA" in the filed for record of the part process name data and records the time T₁₄ when the barcode is read in a "region for recording the part carrying in time data" to update the management data D_{f1} (see Fig. 11 (b)). Further, the server 1' refers to "M₁1" and transfers the updated management data D_{f1} to the server 1. With this configuration, the management data D_{f1} in the state shown in Fig. 11(b) is recorded in the HDD 13 of the server 1. By referring to the management data D_{f1} of this state, the manufacturer M₁ is able to confirm that the shipped products are supplied to the manufacturer M₂. Therefore, it becomes possible to prevent an accident where only the management data D_{f1} is transmitted to the manufacturer M₂ and no product is supplied to the manufacturer M₂ from occurring. In response to the update of the management data D_{f1} to the state shown in Fig. 11(b), the server 1 may inform the worker of the shipping information as described above, for example, by displaying such information on the CRT 17.

When the manufacturer M₂ starts to use the objects stored in the box f1 as parts, the part use start time data T₁₅ is recorded in the management data D_{f1}. After use of the parts is finished, the part use end time data T₁₅ us recorded (see Fig. 11(c)). After the part use end time data T₁₆ is recorded, the server 1' refers to M₁1 and transfers the current management data D_{f1} to the server 1. With this configuration, the management data D_{f1} of the state shown in Fig. 11(c) is recorded in the HDD 13 of the server 1. Therefore, the manufacturers M₁ and M₂ share the same management data D_{f1}.

Next, a process to be executed when the manufacturer M₂ executes tracing of the objects used as parts in the process AA is explained. First, the server 1' refers to the data (management data D_{f1}) of the objects (e.g., objects stored in the box f1) used as parts in the process AA. The server 1' refers to the "M₁1" contained in the management data D_{f1}, and accesses the server 1. Then, the server 1' operates to cause the server 1 to check whether the server 1 has data coinciding with the management data D_{f1}. Correspondingly, the server 1 searches the HDD 13. In the HDD 13, the same management data D_{f1} is recorded. Therefore, the server 1 returns a signal indicating such a state to the server 1'. With this configuration, the server 1' confirms that the objects stored in the box f1 have been shipped from the manufacturer M₁, and the tracing terminates.

It should be noted that the server 1' is able to request the upstream side manufacturer to execute extended tracing of a distribution path. In this case, the server 1' executes the above mentioned tracing first to confirm that the objects stored in the box f1 have been shipped from the manufacturer M₁, and then transmits a request signal requesting the server 1 to execute extended tracing of the distribution path. Correspondingly, the server 1 executes the tracing of a target object in the manufacturer M₁ to confirm that the distribution path of the objects associated with the box f1 is a path in which the processes F, C and B are connected in this order. Similarly to the server 1' as explained above, the server 1 refers to data of the objects used as parts in the process B. The process B is regarded as a process in which the products shipped by the upstream side manufacturer as parts are received and subjects the received objects to a certain process. For this reason, in the management data of the process B, its own address or addresses of upstream side manufacturers such as M₁1 and M₂2 in the network are included. The server 1 communicates with the upstream side manufacturer in the same process as that for the server 1' explained above, and confirms that the objects stored in the box Bn have been shipped from the upstream side manufacturer. Then, the server 1 transmits a signal indicating such a state to the server 1'. By repeating such a sequence of processes, the server 1' is able to obtain information of the extended distribution path concerning the objects stored in the box f1.

In the distributed traceability management system according to the embodiment, the servers share only data of the process shipping products and the process receiving parts with each other. That is, the manufacturers share only data forming a link regarding objects with each other. Further, the manufacturer is able to conduct detailed tracing in its own process. Therefore, in the distributed traceability management system according to the embodiment, it is possible to accomplish the distribution management which does not require unnecessary disclosure in regard to the major part of the processes.

By employing the distributed traceability management system according to the embodiment, it is possible to suppress leaking of information from a vendor to a minimum level while easing management of targets distributed through a plurality of vendors and enhancing the traceability function.

Although the present invention has been described in considerable detail with reference to certain preferred embodiments thereof, other embodiments are possible.

In the above mentioned embodiment, an act for manufacturing a product while processing parts is defined as a process, and a cluster being transferred through processes is defined as a box. However, a system configured to quickly judge whether a possibility of a problem arises during movement of articles between processes and a system for tracing the problem can also be applied to other fields (e.g., distribution, an economy, and etc.) by replacing "article", "process", "product", "part" and "box" with other ones, respectively.

For example, the "article" may be replaced with a "tangible object" (e.g., the above mentioned parts and products or meat) or an "intangible" (e.g., an economy, management, or etc.). The "process" may be replaced with "processing" to be applied to various types of articles. The "product" may be replaced with a "produced object" produced in certain processing. The "part" may be replaced with a "partial object" used to make the produced object. The "box" may be replaced with a "cluster" being transferred through processes. By replacing the elements as described above, the management system according to the embodiment may be applied to various forms of process management systems for managing a tangible object such as meat and for managing an intangible corresponding to information for controlling an economy, management or distribution.

In an embodiment according to the invention, when final products shipped from an upstream side vendor are received, a downstream side vendor may transmit a receipt indication signal indicating such a state to the upstream side vendor.

In an embodiment according to the invention, the final management data may include, as the connection information, identification information of the downstream side vendor and the upstream side vendor. When the downstream side vendor judges that the same final management data is stored in the data storage units of the downstream side vendor and the upstream side vendor through communication between the downstream side vendor and the upstream side vendor based on the connection information, the downstream side vendor confirms that the upstream side vendor is a shipping source of the management target.

## Claims

1. A distributed traceability management system managing objects distributed along a path successively connecting a plurality of vendors, comprising:
a management data creation means that creates, in regard to a management target object, product data corresponding to products in a preceding process and partial object data which corresponds the products and to partial objects of a next process, and creates, in regard to relationship between processes, management data formed as a single file in which the product data and the partial object data are associated with connection information representing connection between a preceding process and a corresponding next process, when final products are shipped toward to a downstream side vendor by executing a sequence of process where a preceding process for creating products used as parts in a next process and a next process for creating second products using the products created by at least one preceding process as parts are successively connected;
a data storage means that stores the management data created in association with each process; and
a data communication means that transmits, to the downstream side vendor, final management data regarding a process for creating final products when the final products are shipped to the downstream side vendor, and that receives the final management data transmitted by an upstream side vendor,
wherein the plurality of vendors are connected to each other via a network,
wherein the received final management data is stored in the data storage means.

2. The distributed traceability management system according to claim 1,
wherein, when the final products shipped from the upstream side vendor are received, the downstream side vendor transmits a receipt indication signal indicating the reception to the upstream side vendor.

3. The distributed traceability management system according to claim 1 or 2,
wherein the final management data includes, as the connection information, identification information of the downstream side vendor and the upstream side vendor,
wherein, when the downstream side vendor judges that the same final management data is stored in the data storage units of the downstream side vendor and the upstream side vendor through communication between the downstream side vendor and the upstream side vendor based on the connection information, the downstream side vendor confirms that the upstream side vendor is a shipping source of the management target.
